Europäisches Patentamt

European Patent Office

Office européen des brevets

(19)

(11) Numéro de publication : **0 094 309**
**B1**

(12) **FASCICULE DE BREVET EUROPÉEN**

(45) Date de publication du fascicule du brevet :
**20.08.86**

(21) Numéro de dépôt : **83400917.7**

(22) Date de dépôt : **06.05.83**

(51) Int. Cl.⁴ : **C 03 B 33/02, C 03 B 33/10**

(54) Dispositif de commande simultanée de l'ensemble des outils traceurs traçant des traits longitudinaux parallèles sur une bande de verre en mouvement.

(30) Priorité : **07.05.82 FR 8208015**

(43) Date de publication de la demande :
**16.11.83 Bulletin 83/46**

(45) Mention de la délivrance du brevet :
**20.08.86 Bulletin 86/34**

(84) Etats contractants désignés :
**BE DE GB IT**

(56) Documents cités :
**DE-A- 2 820 102**
**US-A- 1 834 143**
**US-A- 2 377 098**

(73) Titulaire : **SOCIETE GENERALE POUR LES TECHNI-
QUES NOUVELLES S.G.N. Société anonyme dite:
1, rue des Hérons Montigny-le-Bretonneux
F-78184 Saint-Quentin en Yvelines Cedex (FR)**

(72) Inventeur : **Gabillet, Maurice
53, rue d'Aguesseau
F-92100 Boulogne-Billancourt (FR)**

(74) Mandataire : **Combe, André et al
CABINET BEAU DE LOMENIE 55 rue d'Amsterdam
F-75008 Paris (FR)**

## Description

La présente invention concerne un dispositif permettant la commande simultanée de l'ensemble des outils-traceurs qui tracent des traits longitudinaux parallèles sur une bande de verre en mouvement.

Les feuilles de verre élaborées par exemple par le procédé connu sous le nom de « float glass » sont le plus souvent « tracées » par des dispositifs appropriés, directement à la sortie de la machine qui prépare lesdites feuilles. Le traçage consiste à marquer sur la surface des feuilles de verre les traits suivants lesquels la feuille sera morcelée en produits élémentaires de dimensions souhaitées.

Ledit traçage des feuilles de verre s'effectue généralement selon deux directions perpendiculaires ; l'une de ces directions est parallèle à la direction générale du ruban de verre (c'est-à-dire parallèle aux bords dudit ruban) et l'autre direction est perpendiculaire au ruban.

Les traits perpendiculaires au ruban sont le plus souvent tracés, à intervalles précis, à l'aide d'une machine spéciale connue, disposée obliquement par rapport à l'axe longitudinal du ruban.

Les traits longitudinaux sont généralement tracés par un certain nombre d'outils traceurs — en eux-mêmes connus — convenablement fixés sur une barre disposée perpendiculairement à l'axe longitudinal du ruban.

Ces outils traceurs — on en compte généralement de 2 à 10 sur la largeur de la bande de verre — doivent pouvoir réaliser, à partir de leur position de marquage, deux mouvements contrôlés à savoir :

un mouvement d'ensemble, consistant dans le relèvement d'une hauteur de l'ordre du millimètre ou de quelques millimètres au-dessus de la surface du verre, simultané de tous les outils traceurs,

un mouvement individuel, consistant dans le relèvement d'une hauteur de plusieurs centimètres au-dessus de la surface du verre, de chaque outil traceur considéré individuellement, afin de pouvoir modifier à volonté le nombre d'outils traceurs actifs et, si nécessaire, de pouvoir effectuer certaines réparations standards sur ces outils en cas d'usure ou de dérèglement.

Si le mouvement individuel de chaque traceur envisagé ci-dessus est actuellement réalisé par des méthodes connues et donnant satisfaction, par contre le mouvement d'ensemble des outils traceurs pose certains problèmes.

Pour que le marquage de la bande de verre soit acceptable, il faut que le marquage longitudinal puisse être interrompu, puis repris avec une précision très grande qui actuellement est de l'ordre du centimètre mais qui devrait avantageusement selon les techniciens atteindre le millimètre.

De plus, il faut que le marquage soit interrompu puis repris avec une simultanéité parfaite sur l'ensemble des traceurs.

C'est cette commande du mouvement d'ensemble des outils traceurs qui fait l'objet de la présente invention.

A ce jour, la technique couramment utilisée pour effectuer la manœuvre d'ensemble — relèvement puis abaissement — des outils traceurs consiste à munir chaque porte-outil d'un vérin (ou équivalent) et d'envoyer simultanément à chaque vérin l'ordre adéquat. Malheureusement l'expérience montre que cette technique n'est pas suffisamment précise ni fiable, ce qui explique que la précision industrielle actuellement admise n'est pas très bonne (précision 0,5 à 10 mm).

Des dispositifs destinés à assurer les déplacements d'un outil solidaire d'un porte-outil disposé sur un bras ont été décrits notamment dans le brevet US-A-2 377 098 où ledit déplacement est réalisé par une articulation autour de deux axes montés sur excentriques et dans le brevet DE-A-2 820 102 où le bras solidaire du porte-outil est monté sur une articulation autour d'un axe par l'intermédiaire d'un vérin pour monter et descendre ledit porte-outil. C'est par rapport à ces documents, plus particulièrement le deuxième, que la présente invention a été définie.

La présente invention concerne donc un dispositif permettant de commander avec précision les mouvements simultanés de levée et de descente des outils traceurs qui tracent les traits longitudinaux sur une bande de verre se déplaçant longitudinalement sur un support convenable, ledit dispositif étant formé d'une barre porteuse disposée perpendiculairement à l'axe de la bande de verre et parallèlement au plan de ladite bande, barre sur laquelle sont convenablement positionnés des outils de traçage solidaires de porte-outils, l'ensemble outil-porte-outils étant solidaire d'un bras articulé autour d'un axe relié par l'intermédiaire d'un vérin releveur à un chariot porte-outils, (cf. DE-A-2 820 102) caractérisé en ce que l'ensemble outil-porte-outils solidaire du bras est également articulé autour d'un axe tourillonnant autour d'un arbre excentrique monté sur le chariot porte-outils, disposé perpendiculairement à l'axe de la bande et entraîné en rotation d'un quart ou demi-tour par l'action d'un moteur fonctionnant en pas à pas à marche inversable automatiquement commandé, la position relative des deux axes commandant la position du bras articulé, donc de l'outil traceur, étant telle que, pour l'une des positions de l'arbre excentrique, l'outil traceur touche la surface de la bande de verre et que, pour l'autre position, l'outil traceur soit distant de l'ordre du millimètre de ladite surface.

L'invention sera mieux comprise en se référant au mode de réalisation non limitatif ci-après représenté sur les figures 1 à 4.

la figure 1 est une vue schématique d'un dispositif connu utilisé pour le traçage des feuilles de verre élaborées par le procédé dit « float glass »,

la figure 2 est une vue du dispositif selon l'invention,

la figure 3 est une vue schématique générale en élévation frontale du dispositif de traçage selon l'invention, cette vue représentant plus particulièrement la position de commande du mécanisme de déplacement (levée ou descente) des outils traceurs,

la figure 4 est une vue montrant en coupe la réalisation de la fixation du bras articulé sur l'arbre excentrique.

Sur la figure schématique 1 on a représenté :

en 1 un convoyeur qui supporte et assure le déplacement d'une bande de verre 2 ;

en 3 une barre transversale, inclinée par rapport à l'axe de défilement de la bande de verre ; cette bande guide le déplacement d'un ou plusieurs outils 4 qui assurent le traçage, sur la bande de verre, de traits perpendiculaires à l'axe de déplacement de la bande. Ces traits 5 servent d'amorce pour la coupure 6 de la glace ;

en 8 une barre porteuse disposée perpendiculairement à l'axe de déplacement de la bande porte plusieurs outils traceurs 7 qui déterminent, sur la bande, des traits longitudinaux.

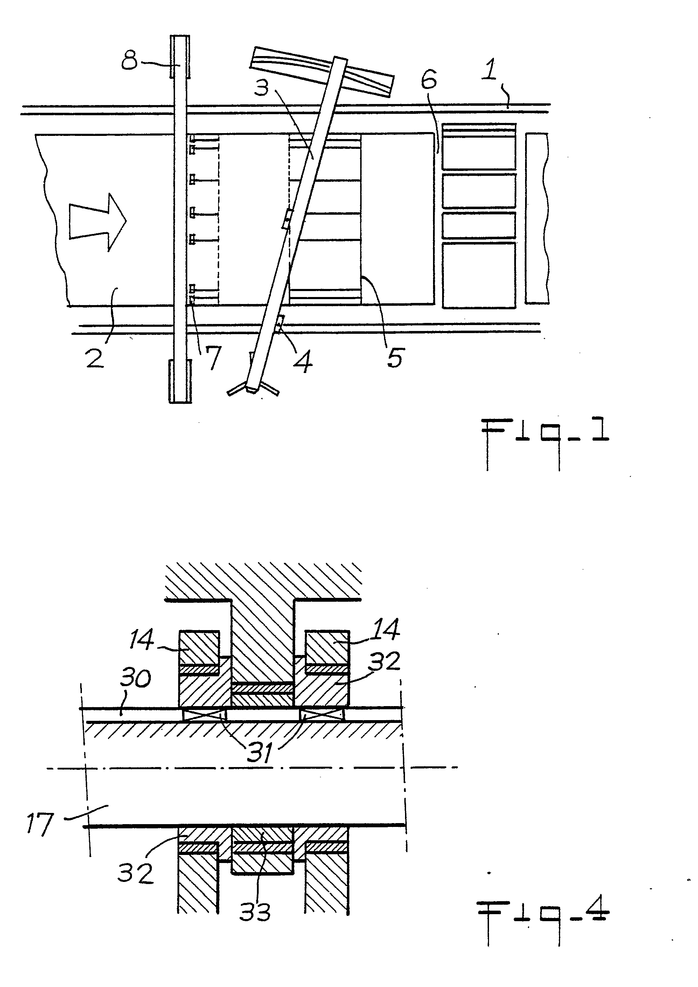

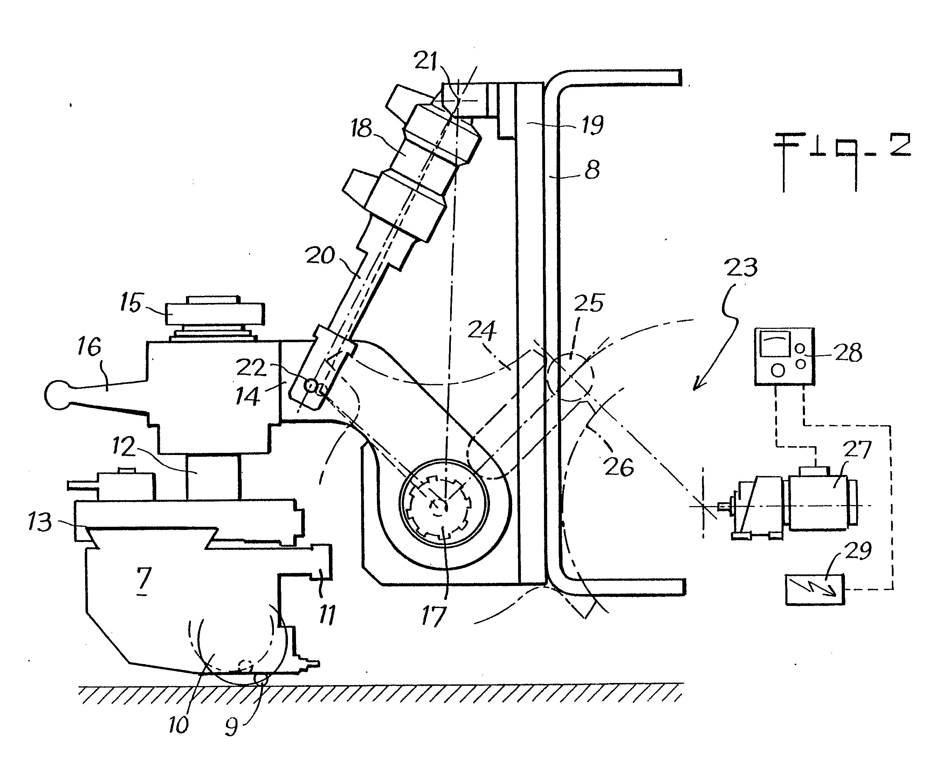

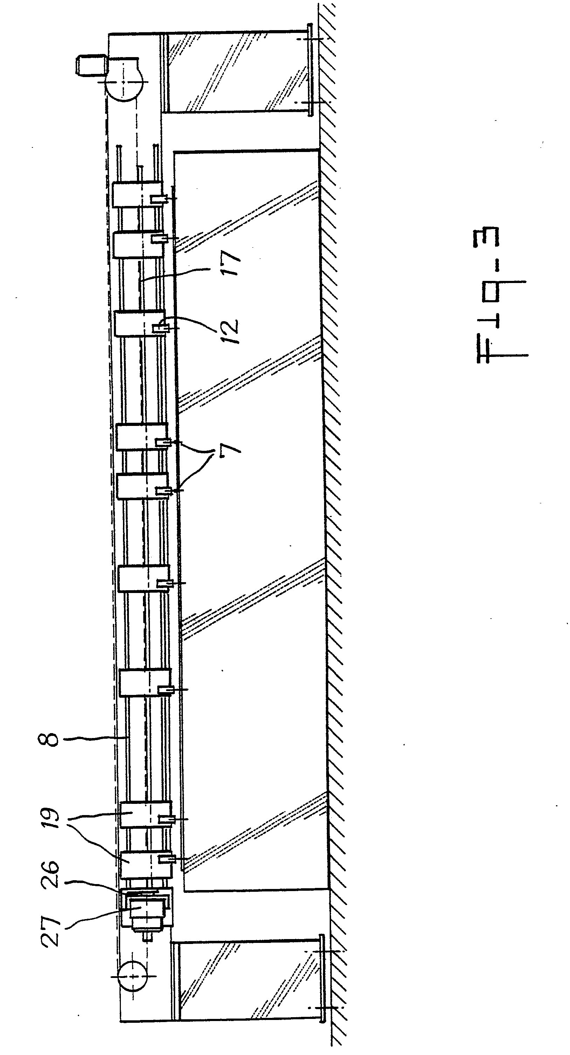

Sur la figure 2, on a représenté :

en 7 l'outil traceur qui est constitué essentiellement — comme connu — d'une molette en carbure 9 qui réalise la trace sur le verre, et d'une roue pare-chocs 10 qui limite notamment la profondeur de l'incision. Un bouton moleté 11 agissant sur un ressort — non représenté — permet de régler la pression de molette sur le verre ;

en 12 un porte-outil est rendu solidaire de l'outil 7 par une queue d'aronde 13 ; ce porteoutil 12, donc l'outil 7, peut être réglé en hauteur et en position angulaire en fonction de la feuille de verre et de l'inclinaison du pont ; il est bloqué grâce au bouton moleté 15 et à la poignée de blocage 16 ;

l'ensemble constitué par l'outil, le porte-outils et les divers dispositifs de réglage décrits ci-dessus est monté sur le bras articulé 14. Ce bras est articulé autour d'un axe 22 situé à l'extrémité d'un vérin pneumatique 18 dont l'autre extrémité peut pivoter autour d'un axe fixe 21 porté par le chariot porte-outils 19 et peut tourillonner librement autour d'un arbre excentrique 17 également porté par ledit chariot porte-outils 19. On conçoit que les axes 22, 21 et 17 déterminent, grâce à leur position respective, la position de l'ensemble outil-porte-outils. Ces positions respectives sont choisies de façon que dans la position « travail » l'outil soit en contact (grâce notamment aux divers réglages définis plus haut) avec la surface de la glace et que

par rotation de l'arbre excentrique 17 (sans modification de la longueur du vérin 18) l'outil 7 soit relevé au-dessus de la surface de la glace d'une hauteur de l'ordre du millimètre ;

indépendamment du mouvement dû à la rotation de l'excentrique 17 on puisse, par action sur le vérin 18 (action sur la tige 20) remonter l'axe 22 donc l'ensemble outil-porte-outils d'une hauteur de plusieurs centimètres au-dessus de la surface de la glace de façon par exemple à pouvoir réaliser des réparations sur l'outil ou de façon à pouvoir supprimer temporairement l'action de cet outil ;

en 23 on a représenté le dispositif de rotation de l'arbre excentrique 17, ce dispositif comporte une portion de croix de Malte 24 qui exécute un quart de tour chaque fois que le doigt 25 porté par le disque 26 exécute lui-même une rotation d'un tour (en fait il est clair qu'une rotation d'un quart de tour du doigt 25 suffirait à entraîner la croix de Malte 24) ; le disque 26 est directement accouplé à un motoréducteur 27 qui effectue un tour (alternativement dans un sens et dans l'autre) chaque fois qu'une information extérieure spécifique 29 — présence d'un trait de découpe transversal par exemple — est fournie au dispositif automatique de commande 28. Les caractéristiques du motoréducteur et du dispositif de commande sont définies de façon que le mouvement puisse être déclenché avec précision et puisse être exécuté dans le minimum de temps.

Sur la figure 3 qui représente schématiquement en élévation frontale l'ensemble du dispositif de traçage des bandes, on a représenté :

en 8 la barre porteuse qui porte les chariots 19 ; ces chariots assurent un positionnement convenable et contrôlé des outils 7 montés sur les porte-outils 12 ;

en 17 l'arbre excentrique qui commande tous les outils ;

en 27 le moteur qui commande la rotation de l'arbre 17 par l'intermédiaire du disque 26.

Sur la figure 4, on a représenté en coupe la fixation du bras articulé sur l'arbre excentrique ; on voit

en 17 l'arbre excentrique ; cet arbre comporte une rainure 30 (ou des cannelures) dans laquelle peuvent coulisser les clavettes 31 fixées sur les douilles excentrées 32 autour desquelles rotulent les bras articulés 14 ;

la porte 33 joue le rôle de canon de centrage ; on remarquera que le bras articulé 14 se compose au niveau de l'arbre de deux branches parallèles (14-14) qui permettent un contrôle plus précis du positionnement de l'outil 7.

Comme il a été indiqué précédemment l'invention permet

un contrôle très précis de la position de chaque outil traceur par rapport à la surface de la glace,

un relèvement fiable, très rapide, donc très précis, et simultané de tous les outils traceurs disposés transversalement par rapport à la bande de glace,

un relèvement important individuel de chaque outil traceur en vue de le mettre hors service momentanément ou de le réparer.

**Revendications**

1. Dispositif permettant de commander avec précision les mouvements simultanés de levée et de descente des outils traceurs (9) qui tracent les traits longitudinaux sur une bande de verre (2) se déplaçant longitudinalement sur un support convenable, ledit dispositif étant formé d'une barre porteuse (8) disposée perpendiculairement à l'axe de la bande de verre et parallèlement au plan de ladite bande, barre sur laquelle sont convenablement positionnés des outils de traçage solidaires de porte-outils (7, 12), l'ensemble outil-porte-outils (9, 7, 12) étant solidaire d'un bras (14) articulé autour d'un axe (22) relié par l'intermédiaire d'un vérin releveur (18) à un chariot porte-outils (19), caractérisé en ce que l'ensemble outil-porte-outils (9, 7, 12) solidaire du bras (14) est également articulé autour d'un axe tourillonnant autour d'un arbre excentrique (17) monté sur le chariot porte-outils (19), disposé perpendiculairement à l'axe de la bande (2) et entraîné en rotation d'un quart ou demi-tour par l'action d'un moteur (27) fonctionnant en pas à pas à marche inversable automatiquement commandé, la position relative des deux axes commandant la position du bras articulé (14), donc de l'outil traceur (9), étant telle que, pour l'une des positions de l'arbre excentrique (17), l'outil traceur (9) touche la surface de la bande de verre (2) et que, pour l'autre position, l'outil traceur (9) soit distant de l'ordre du millimètre de ladite surface.

2. Dispositif selon la revendication 1, caractérisé en ce que chaque vérin (18) releveur peut être commandé individuellement pour relever l'ensemble outil-porte-outils (9, 7, 12) d'une hauteur de l'ordre de plusieurs centimètres au-dessus de la surface de la glace.

3. Dispositif selon l'une des revendications 1 et 2, caractérisé en ce que la rotation de l'arbre excentrique (17) est commandée par l'intermédiaire d'un doigt (25) agissant sur un dispositif du type croix de Malte (24), et que cette rotation commande le relevage simultané de tous les outils.

4. Dispositif selon l'une des revendications 1, 2 et 3, caractérisé en ce que le bras articulé (14) présente, au niveau de l'arbre excentrique (17), la forme de deux branches parallèles.

5. Dispositif selon la revendication 1, caractérisé en ce que l'arbre excentrique (17) comporte une rainure (30) ou des cannelures.

**Claims**

1. Device for accurately controlling the simultaneous lowering and. raising of tracing tools (9) which plot longitudinal strokes on a glass band (2) moving longitudinally on a suitable support, said device being constituted by a carrying bar (8), placed perpendicularly to the axis of the glass band and parallel to the plane of said band, on which bar are suitably positioned tracing tools integral with the tool holder (7, 12), the assembly tool-tool holder (9, 7, 12) being integral with an arm (14) pivoting about an axis (22) connected via a lifting jack (18) to a tool holding carriage (19), characterized in that the assembly tool-tool holder (9, 7, 12) integral with the arm (14) is also mounted for pivoting about an axis swivelling about an eccentric shaft (17) mounted on the tool holding carriage (19), placed perpendicularly to the axis of the band (2), and driven in rotation by a quarter turn or half turn by an automatically controlled motor (27) working in stepwise and reversable fashion, the relative position of the two axes controlling the position of the hinged arm (14), hence of the tracing tool (9) being such that, for one of the position of the eccentric shaft (17), the tracing tool (9) touches the surface of the glass band (2) and that, for the other position, the tracing tool (9) is at a distance of about one millimeter from the said surface.

2. Device according to claim 1, characterized in that each lifting jack (18) can be individually controlled to lift the assembly tool-tool holder (9, 7, 12) according to a height in the order of about several centimeters above the glass surface.

3. Device according to any one of claims 1 and 2, characterized in that the rotation of the eccentric shaft (17) is controlled by.means of a finger (25) acting on a Maltese Cross type device (24) and that said rotation controls the simultaneous raising of all tools.

4. Device according to any one of claims 1, 2 and 3, characterized in that the hinged arm (14) has, at the level of the eccentric shaft (17) the shape of two parallel branches.

5. Device according to claim 1, characterized in that the eccentric shaft (17) comprises a groove (30) or channels.

**Patentansprüche**

1. Vorrichtung zur genauen Steuerung der gleichzeitigen Anhebe- und Absenkbewegungen von Ritzwerkzeugen (9), die Längsritzen auf einem Glasband herstellen, das sich auf einem geeigneten Träger in Längsrichtung bewegt, wobei die Vorrichtung durch einen Tragbalken (8) gebildet ist, der senkrecht zur Achse des Glasbands und parallel zur Ebene des Bands angeordnet ist, wobei auf dem Balken mit Werkzeughaltern (7, 12) fest verbundenen Ritzwerkzeuge geeignet positioniert sind, wobei die Anordnung Werkzeug-Werkzeughalter (9, 7, 12) mit einem Arm (14) fest verbunden ist, der an einer Achse (22) angelenkt ist, die mittels eines Hubzylinders (18) mit einem Werkzeughalter-Tragschlitten (19) verbunden ist, dadurch gekennzeichnet, daß die mit dem Arm (14) fest verbundene Anordnung Werkzeug-Werkzeughalter (9, 7, 12) ebenfalls an einer Achse angelenkt ist, die um eine exzentrische Welle (17) drehbar ist, die am Werkzeughalterschlitten (19) gelagert ist, senkrecht zur Achse des Bands (2) angeordnet ist und um eine viertel oder halbe Umdrehung durch einen Motor (27) angetrieben wird, der mit automatischer Umsteuerung schrittweise arbeitet, wobei die gegenseitige Position der beiden Achsen, die die Position des angelenkten Arms (14), folglich des Ritzwerkzeugs (9), steuert, von der Art ist,

daß in einer der Positionen der exzentrischen Welle (17) das Ritzwerkzeug (9) die Oberfläche des Glasbands (2) berührt und daß in der anderen Position das Ritzwerkzeug (9) in der Größenordnung eines Millimeters von der Oberfläche entfernt ist.

2. Vorrichtung nach Anspruch 1, dadurch gekennzeichnet, daß jeder Hubzylinder (18) einzeln steuerbar ist, um die Anordnung Werkzeug-Werkzeughalter (9, 7, 12) um eine Höhe in der Größenordnung von einigen Zentimetern über die Oberfläche des Glases anzuheben.

3. Vorrichtung nach einem der Ansprüche 1 und 2, dadurch gekennzeichnet, daß die Drehung der exzentrischen Welle (17) durch einen Finger (25) gesteuert wird, der auf eine Vorrichtung nach Art eines Malteserkreuzes wirkt, und daß diese Drehung das gleichzeitige Anheben aller Werkzeuge steuert.

4. Vorrichtung nach einem der Ansprüche 1, 2 und 3, dadurch gekennzeichnet, daß der angelenkte Arm (14) in Höhe der exzentrischen Welle (17) die Form zweier paralleler Schenkel hat.

5. Vorrichtung nach Anspruch 1, dadurch gekennzeichnet, daß die exzentrische Welle (17) eine Nut oder Rillen (30) hat.

**Fig-1**

**Fig-4**

Fiq-2

0 094 309

Fig. 3